# EUROPEAN PATENT APPLICATION

(11) **EP 2 427 016 A1**
(43) Date of publication of application: **07.03.2012**
(21) Application number: 10769848.2
(22) Date of filing: 30.04.2010
(51) Int. Cl.: H04W 72/12, H04W 52/34, H04W 72/14

(54) **WIRELESS BASE STATION**

(30) Priority: 01.05.2009 JP 2009112300
(71) Applicant: NTT DOCOMO, INC., Chiyoda-ku Tokyo 100-6150 (JP)
(72) Inventor: YAJIMA, Tatsuro, Tokyo 100-6150 (JP); HANAKI, Akihito, Tokyo 100-6150 (JP); OYANE, Hidehiko, Tokyo 100-6150 (JP)
(74) Representative: HOFFMANN EITLE
(86) International application number: PCT/JP2010/057717
(87) International publication number: WO 2010/126150

(57) **Abstract**

A radio base station NodeB), wherein a scheduling unit (13) is configured to determine scheduling grant information to be transmit to a mobile station (UE) scheduled for the next scheduling assignment interval based on the predicted range of receivable power at the starting point of the next scheduling assignment interval.

## Description

### TECHNICAL FIELD

The present invention relates to a radio base station.

### BACKGROUND ART

The 3GPP defines a high-speed uplink communication which is referred to as "EUL (Enhanced Uplink)" or "HSUPA (High-Speed Uplink Packet Access)".

In EUL, a mobile station UE is configured to transmit a data signal (MAC-e PDU) via a high-speed uplink communication data channel (E-DPDCH: Enhaneed-Dedieated Physical Data Channel) to a radio base station NodeB.

Specifically, in EUL, it is configured such that the radio base station NodeB determines a mobile station UE scheduled for each time slot (TTI: Transmission Time Interval), and transmits scheduling grant information, (AG: Absolute Grant or RG: Relative Grant), to the scheduled mobile station.

The mobile station UE scheduled for each time slot is configured to transmit MAC-e PDUs of the size (TBS: Transport Block Size) corresponding to the scheduling grant information (AG) received from the radio base station NodeB via E-DPDCH.

In this case, the mobile station UE scheduled for each time slot is configured to transmit MAC-e PDUs via E-DPDCH by a transmission power (or transmission amplitude) determined based on a "transmission power ratio (or transmission amplitude ratio) between E-DPDCH and a general uplink communication dedicated control channel (DPCCH: Dedicated Physical Control Channel)" corresponding to the AG.

Additionally, in EUL of a "Time and Rate" scheme, it is configured such that only one mobile station UE is scheduled for each scheduling assignment interval.

However, the above-described EUL of a "Time and Rate" scheme has a problem that when the radio base station NodeB switches the scheduled mobile station UEs, it is not determined as to what scheduling grant information (AG) should be transmitted.

### SUMMERY OF THE INVENTION

A radio base station according to a first feature of the present invention includes: a received power range changing unit configured to change a range of a receivable power based on an average total received power at a predetermined timing; a scheduling unit configured to determine one mobile station as a mobile station scheduled for a next scheduling assignment interval and to determine scheduling grant information to be transmitted to the determined mobile station; and a scheduling grant information transmission unit configured to transmit scheduling grant information instructing a first mobile station scheduled for a present time slot to stop transmitting a data signal via a high-speed uplink communication dedicated data channel in the next scheduling assignment interval, when switching scheduled mobile stations, and to transmit the scheduling grant information determined by the scheduling unit to a second mobile station scheduled for the next scheduling assignment interval, wherein the scheduling unit is configured to determine the scheduling grant information to be transmitted to the mobile station scheduled for the next scheduling assignment interval, based on a predicted range of the receivable power at a starting timing of the next scheduling assignment interval.

### BRIEF DESCRIPTION OF THE DRAWINGS

[Fig. 1] Fig. 1 is a diagram illustrating the entire configuration of a mobile communication system according to a first embodiment of the present invention.
[Fig. 2] Fig. 2 is a functional block diagram of a radio base station according to the first embodiment of the present invention.
[Fig. 3] Fig. 3 is a graph explaining scheduling grant information that the radio base station according to the first embodiment of the present invention should transmit to a mobile station scheduled for a next TTI.
[Fig. 4] Fig. 4 is a table illustrating one example of a corresponding table between an AG index and a transmission power ratio used in the mobile communication system according to the first embodiment of the present invention.
[Fig. 5] Fig. 5 is a flowchart illustrating an operation of a radio base station in the mobile communication system according to the first embodiment of the present invention.

### BEST MODES FOR CARRYING OUT THE INVENTION

### (Configuration of mobile communication system according to first embodiment of the present invention)

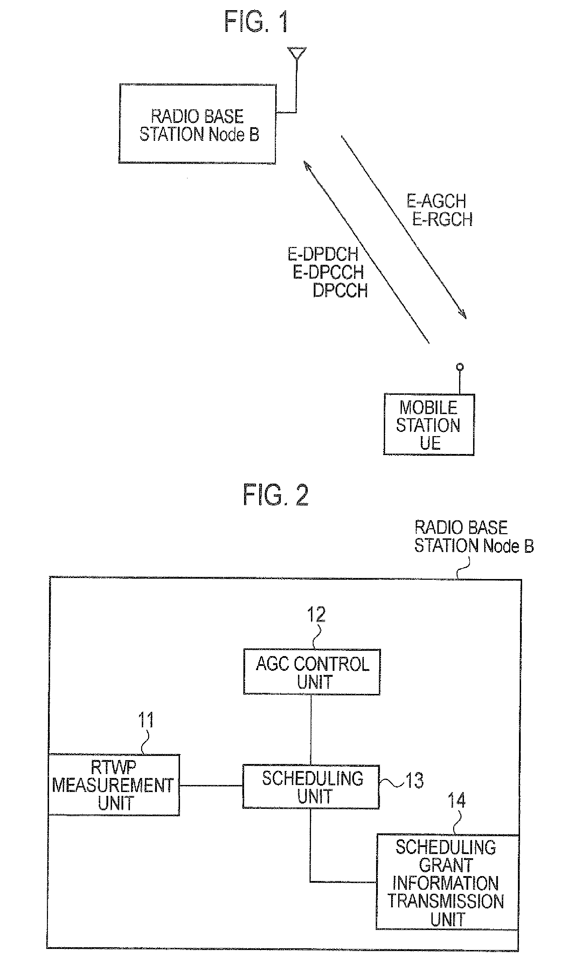

With reference to Fig. 1 through Fig. 4, the configuration of a mobile communication system according to a first embodiment of the present invention will be described.

As illustrated in Fig. 1, the mobile communication system according to this embodiment is configured such that EUL is provided between a radio base station NodeB and a mobile station UE.

That is, in the mobile communication system according to this embodiment, between the radio base station NodeB and the mobile station UE, an absolute grant channel (E-AGCH: E-DCH Absolute Grant Channel), a relative grant channel (E-RGCH: E-DCH Relative Grant Channel), etc., can be set as a downlink channel while a high-speed uplink communication data channel (E-DPDCH: E-DCH Dedicated Physical Data Channel), a high-speed uplink communication control channel (E-DPCCH: E-DCH Dedicated Physical Control Channel), an uplink control channel (DPCCH: Dedicated Physical Control Channel), etc., can be set as an uplink channel.

In this case, the radio base station NodeB is configured to receive MAC-e PDUs each containing at least one MAC-d PDU of a fixed size transmitted via E-DPDCH by the mobile station UE.

As illustrated in Fig. 2, the radio base station NodeB includes an RTWP (Received Total Wideband Power) measurement unit 11, an AGC (Auto Gain Control) control unit 12, a scheduling unit 13, and a scheduling grant information transmission unit 14.

The RTWP measurement unit 11 is configured to measure RTWP in the radio base station NodeB so as to calculate the average RTWP at a predetermined timing.

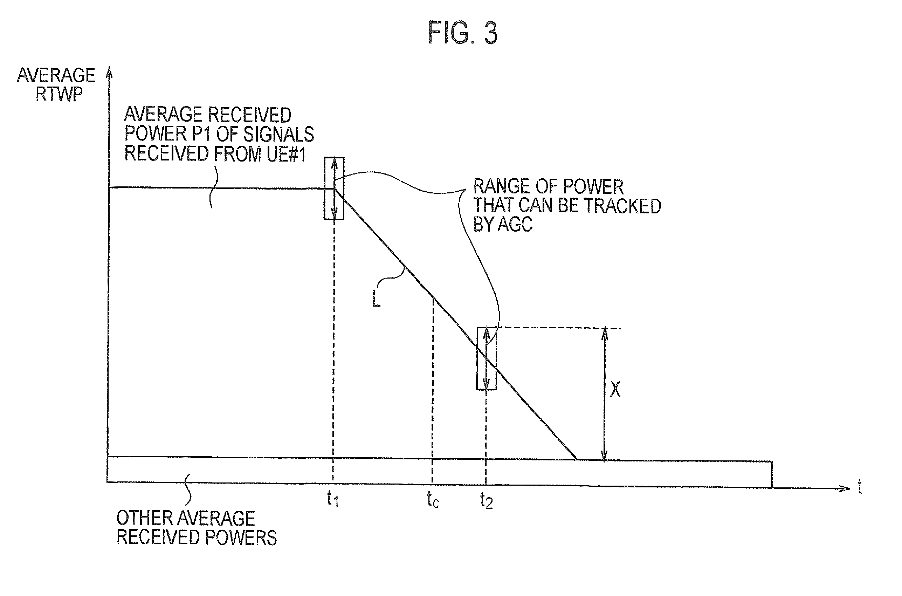

As shown in Fig. 3, it is noted that the average RTWP is a sum of an average received power P1 of signals received from the scheduled mobile station UE of EUL and other average received power P2 (an average value of received powers of signals received from a mobile station UE other than the scheduled mobile station UE of EUL, noise power, and others.)

The RTWP measurement unit 11 may calculate the average RTWP at a predetermined timing by using a forgetting coefficient, or may calculate the average RTWP at a predetermined timing by using, as an average interval, a predetermined period that precedes the predetermined timing.

The AGC control unit 12 is configured to change a range of a receivable power in the radio base station NodeB (i.e., a range of power that can be tracked by AGC), based on an average total received power at a predetermined timing.

For example, as illustrated in Fig. 3, the AGC control unit 12 is configured to determine the range of a receivable power at t1 based on the average RTWP at t1 and to determine the range of a receivable power at t2 based on the average RTWP at t2.

The scheduling unit 13 is configured to determine the mobile station UE scheduled for a next TTI (HARQ process) and to determine the scheduling grant information (AG: Absolute Grant) to be transmitted to the determined mobile station UE. Specifically, the scheduling unit 13 is configured to determine only one mobile station UE scheduled for each TTI, corresponding to EUL of a "Time and Rate" scheme.

Moreover, as illustrated in Fig. 3, the scheduling unit 13 is configured to determine the scheduling grant information (AG) to be transmitted to the mobile station UE#2 scheduled for a next scheduling assignment interval based on the predicted range of the receivable power at a timing t2 of starting the next scheduling assignment interval.

For example, the scheduling unit 13 may be configured to use the scheduling grant information (AG) corresponding to an upper limit value X in the power range of a receivable power at a timing t2 as the scheduling grant information (AG) to be transmitted to the mobile station UE#2 scheduled for a next scheduling assignment interval, when the scheduling unit 13 switches the scheduled mobile stations at a timing t2.

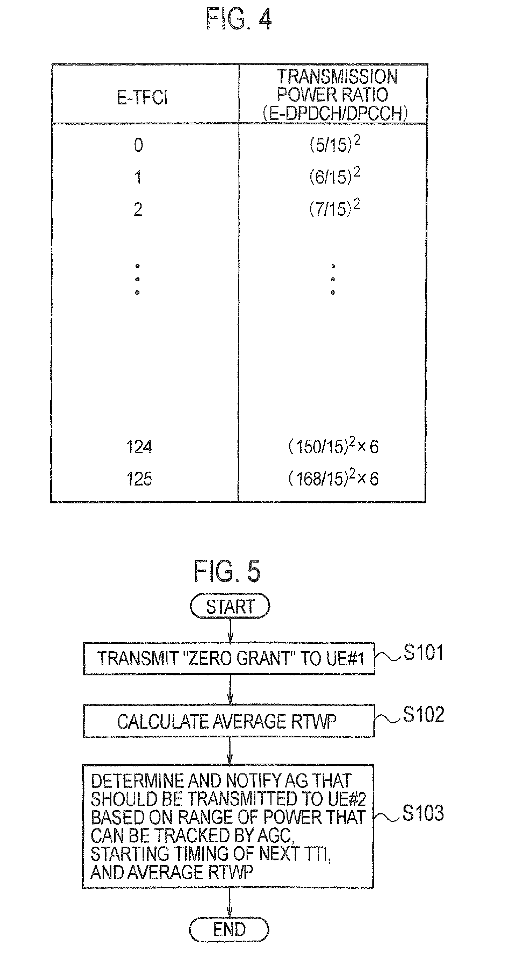

In this case, the radio base station NodeB and the mobile station UE manage a corresponding table as illustrated in Fig. 4. Such a corresponding table is configured to associate "E-TFCI (E-DCH Transport Format Combination Indicator)" and "transmission power ratio", as illustrated in Fig. 4.

In this case, "E-TFCI" is an index defining TBS of MAC-e PDUs, and "transmission power ratio" indicates a transmission power ratio (or a transmission amplitude ratio) between E-DPDCH and DPCCH. It is noted that the transmission power of DPCCH is configured to be changed by the transmission power control between the radio base station NodeB and the mobile station UE. The mobile station UE scheduled for each TTI is configured to transmit MAC-e PDUs of a size (TBS) corresponding to a grant value (SG: Scheduling Grant) stored in the mobile station UE, via E-DPDCH, by the transmission power (or a transmission amplitude ratio) determined by the transmission power ratio corresponding to the grant value (SG).

It is noted that the grant value (SG) stored by each mobile station UE is configured to be updated by the scheduling grant information (AG) received in each mobile station UE.

The scheduling unit 13 may be configured to determine the scheduling grant information (AG) to be transmitted to the mobile station UE#2 scheduled for a next scheduling assignment interval, based on a change characteristic of the range of a receivable power when MAC-e PDUs is not received via E-DPDCH and a time difference between a calculation timing of the scheduling grant information (AG) to be transmitted to the mobile station UE#2 scheduled for a next scheduling assignment interval and a timing t2 of starting a next scheduling assignment interval.

In this case, the change characteristic of the range of a receivable power when MAC-e PDUs is not received via E-DPDCH, is a decrease range (dB/s) of the range of a receivable power when MAC-e PDUs is not received via E-DPDCH, and corresponds to a slope of the line L illustrated in Fig. 3. It is noted that such a change characteristic is defined by a time constant of the AGC control unit 11.

In Fig. 3, a time difference between a calculating timing of the scheduling grant information (AG) to be transmitted to the mobile station UE#2 scheduled for a next scheduling assignment interval and a timing t2 of starting a next scheduling assignment interval is "t2 - tc", where "tc" denotes the calculating timing of the scheduling grant information (AG) to be transmitted to the mobile station UE#2 scheduled for a next scheduling assignment interval.

It is noted that in the example of Fig. 4, when the transmission power ratio corresponding to the power that can be permitted as E-DPDCH received power is "(168/15)2x6" within the upper limit value X ("X" in Fig. 3) of the range of a predicted receivable power at a timing t2 of starting a next scheduling assignment interval, the scheduling unit 13 may be configured to use the scheduling grant information (AG) specified by "E-TFCI=125" corresponding to a maximum "transmission power ratio = (168/15)2x6" smaller than "(168/15)2x6" as the scheduling grant information (AG) corresponding to the upper limit value X of the predicted range of a receivable power at a timing t2 of starting the next scheduling assignment interval.

The scheduling grant information notification unit 14 is configured to transmit the scheduling grant information (AG), via E-AGCH, to the mobile station UE scheduled for each TTI (i.e., a serving mobile station that uses a cell subordinate to the radio base station NodeB as a serving cell).

It is noted that when switching the scheduled mobile station UEs, the scheduling grant information notification unit 14 is configured to transmit a "Zero Grant (scheduling grant information)" instructing a mobile station UE (first mobile station) scheduled in the present TTI to stop transmitting MAC-e PDUs in the next TTI and to transmit the scheduling grant information (AG) determined by the scheduling unit 13 to a mobile station UE (second mobile station) scheduled in a next scheduling assignment interval.

In the example of Fig. 3, the radio base station NodeB determines to switch the scheduled mobile station UE from the mobile station UE#1 to the mobile station UE#2 at a time t1, and thereafter, transmits a "Zero Grant" to the mobile station UE#1 in the next TTI, transmits the scheduling grant information (AG) to the mobile station UE#2 scheduled in a next scheduling assignment interval at a time tc, and starts EUL with the mobile station UE#2 scheduled at a time t2.

### (Operation of mobile communication system according to first embodiment of the present invention)

With reference to Fig. 5, the operation of the radio base station NodeB used in the mobile communication system according to the first embodiment of the present invention will be described.

As illustrated in Fig. 5, in step S101, the radio base station NodeB determines to switch the scheduled mobile station UE from the mobile station UE#1 to the mobile station UE#2, and thereafter, transmits a "Zero Grant" to the mobile station UE#1 in the next TTI.

In step S102, the radio base station NodeB calculates the average RTWP at a time tc, at a time tc illustrated in Fig. 3.

In step S103, the radio base station NodeB predicts a range of a receivable power at a starting timing of communication with the mobile station UE#2 scheduled in a next scheduling assignment interval (time t2 illustrated in Fig. 3), determines the scheduling grant information (AG) to be transmitted to the mobile station UE#2 scheduled in a next scheduling assignment interval, based on a range of a predicted receivable power at a starting timing of communication with the mobile station UE#2 scheduled for a next scheduling assignment interval (time t2 illustrated in Fig. 3), the average RTWP at a time tc, and a time difference between a present timing (time tc illustrated in Fig. 3) and a timing (time t2 illustrated in Fig. 3) of starting communication with the mobile station UE#2 scheduled for a next scheduling assignment interval, and transmits the information via E-AGCH.

### (Operation and effect of mobile communication system according to first embodiment of the present invention)

According to the mobile communication system based on the first embodiment of the present invention, when switching the scheduled mobile station UE, the radio base station NodeB transmits a "Zero Grant" to the mobile station UE scheduled for the present TTI, and transmits an "AG" to the mobile station UE scheduled for a next scheduling assignment interval. As a result, it is possible to realize EUL of a "Time & Rate" scheme.

According to the mobile communication system based on the first embodiment of the present invention, when switching the scheduled mobile station UEs, the radio base station NodeB transmits the scheduling grant information (AG) corresponding to the power outside the range of power that can be tracked by AGC to the mobile station UE#2 scheduled for a next scheduling assignment interval, and as a result, it is possible to avoid a situation where the demodulation accuracy of MAC-e PUDS transmitted, via E-DPDCH, from the mobile station UE#2 is deteriorated.

According to the mobile communication system based on the first embodiment of the present invention, the radio base station NodeB is configured to transmit the scheduling grant information (AG) corresponding to the upper limit value of the range of power that can be tracked by AGC at a starting timing of a next scheduling assignment interval, and hence, it is possible to avoid a decrease in throughput obtained after switching the scheduled mobile station UEs.

The above-mentioned characteristics of the embodiment may be expressed as follows:

A first characteristic of this embodiment is a radio base station NodeB, which includes: an AGC control unit 12 configured to change a range of a receivable power based on an average RTWP (average total received power) at a predetermined timing; a scheduling unit 13 configured to determine one mobile station as a mobile station UE scheduled for a next scheduling assignment interval and to determine an AG (scheduling grant information) to be transmitted to the determined mobile station UE; and a scheduling grant information transmission unit 14 configured to transmit a "Zero Grant (scheduling grant information)" instructing a first mobile station UE#1 scheduled for present TTI to stop transmitting MAC-e PDUs (data signal) via E-DPDCH (high-speed uplink communication dedicated data channel) in the next scheduling assignment interval, when switching scheduled mobile station UEs, and to transmit the "AG (scheduling grant information)" determined by the scheduling unit 13 to a second mobile station UE#2 scheduled for the next scheduling assignment interval, in which the scheduling unit 13 is configured to determine the AG to be transmitted to the mobile station UE#2 scheduled for the next scheduling assignment interval, based on the predicted range of a receivable power at a starting timing of the next scheduling assignment interval.

In the first characteristic of this embodiment, the scheduling unit 13 may be configured to use AG corresponding to an upper limit value of the range of a receivable power at a starting timing of the predicted next scheduling assignment interval as the AG to be transmitted to the mobile station UE#2 scheduled for the next scheduling assignment interval.

In the first characteristic of this embodiment, the scheduling unit 13 may be configured to determine the AG to be transmitted to the mobile station UE#2 scheduled for the next scheduling assignment interval, based on a change characteristic of the range of a receivable power when not receiving MAC-e PDUs via E-DPDCH and a time difference between a calculating timing of the AG to be transmitted to the mobile station UE#2 scheduled for the next scheduling assignment interval and a starting timing of the next scheduling assignment interval.

It is noted that the operation of the above-described radio base station NodeB and the mobile station UE may be implemented by a hardware, may also be implemented by a software module executed by a processor, and may further be implemented by a combination of the both.

The software module may be arranged in a storage medium of an arbitrary format such as RAM (Random Access Memory), a flash memory, ROM (Read Only Memory), EPROM (Erasable Programmable ROM), EEPROM (Electronically Erasable and Programmable ROM), a register, a hard disk drive, a removable disk, and a CD-ROM.

The storage medium is connected to the processor so that the processor can write and read information into and from the storage medium. Such a storage medium may also be integrated in the processor. The storage medium and processor may be arranged in an ASIC. Such an ASIC may be arranged within the radio base station NodeB and the mobile station UE. Moreover, the storage medium and processor may be arranged within the radio base station NodeB and the mobile station UE as a discrete component.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

### Industrial Applicability

As described above, according to the present invention, in EUL of a "Time and Rate" scheme, when switching the scheduled mobile station UEs, it is possible to provide a mobile communication method by which it is possible to notify appropriate scheduling grant information to the mobile station UE scheduled for a next scheduling assignment interval and a radio base station thereof.

## Claims

1. A radio base station, comprising:
a received power range changing unit configured to change a range of a receivable power based on an average total received power at a predetermined timing;
a scheduling unit configured to determine one mobile station as a mobile station scheduled for a next scheduling assignment interval and to determine scheduling grant information to be transmitted to the determined mobile station; and
a scheduling grant information transmission unit configured to transmit scheduling grant information instructing a first mobile station scheduled for a present time slot to stop transmitting a data signal via a high-speed uplink communication dedicated data channel in the next scheduling assignment interval, when switching scheduled mobile stations, and to transmit the scheduling grant information determined by the scheduling unit to a second mobile station scheduled for the next scheduling assignment interval, wherein
the scheduling unit is configured to determine the scheduling grant information to be transmitted to the mobile station scheduled for the next scheduling assignment interval, based on the predicted range of the receivable power at a starting timing of a next scheduling assignment interval.

2. The radio base station according to claim 1, wherein
the scheduling unit is configured to use the scheduling grant information corresponding to an upper limit value of the predicted range of the receivable power at the starting timing of the next scheduling assignment interval as the scheduling grant information to be transmitted to the mobile station scheduled for the next scheduling assignment interval.

3. The radio base station according to claim 1 or 2, wherein
the scheduling unit is configured to determine the scheduling grant information to be transmitted to the mobile station scheduled for the next time slot, based on a change characteristic of the range of a receivable power when not receiving the data signal via the high-speed uplink communication dedicated data channel and a time difference between a calculating timing of the scheduling grant information to be transmitted to the mobile station scheduled for the next time slot and a starting timing of the next time slot.
